(19) **Europäisches Patentamt**

**European Patent Office**

**Office européen des brevets**

(11) **EP 1 459 634 B1**

(12) **EUROPEAN PATENT SPECIFICATION**

(45) Date of publication and mention
of the grant of the patent:
**08.06.2005 Bulletin 2005/23**

(51) Int Cl.⁷: **A23G 9/20**, A23G 9/02

(21) Application number: **03250976.2**

(22) Date of filing: **18.02.2003**

(54) **Frozen aerated product**

Aufgeschlagenes gefrorenes Produkt

Denrée aerée et congelée

(84) Designated Contracting States:
**AT BE BG CH CY CZ DE DK EE ES FI FR GB GR HU IE IT LI LU MC NL PT SE SI SK TR**

(43) Date of publication of application:
**22.09.2004 Bulletin 2004/39**

(60) Divisional application:
**03014059.4 / 1 454 535**

(73) Proprietors:
• **UNILEVER PLC**
**London EC4P 4BQ (GB)**
Designated Contracting States:
**GB CY IE**
• **UNILEVER N.V.**
**3013 AL Rotterdam (NL)**
Designated Contracting States:
**AT BE BG CH CZ DK EE ES FI FR DE GR HU IT LI LU MC NL PT SK SE SI TR**

(72) Inventors:
• **Malone, Mark Emmett**
**Bedfordshire, MK44 1LQ (GB)**
• **Underdown, Jeffrey**
**Bedfordshire, MK44 1LQ (GB)**
• **Wix, Loyd**
**Bedfordshire, MK44 1LQ (GB)**

(74) Representative: **Hugot, Alain et al**
**Unilever PLC**
**Unilever Intellectual Property Group**
**Colworth House**
**Sharnbrook Bedford, MK44 1LQ (GB)**

(56) References cited:
**EP-A- 0 220 836** **EP-A- 0 995 685**
**EP-A- 1 095 901** **EP-A- 1 321 043**
**WO-A-97/30600** **US-A- 4 452 823**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to a frozen product which comprises a cartridge containing a frozen aerated confection, such as an ice cream, which is soft at -18°C and which is capable of being extruded from the cartridge into a serving container at that temperature.

## Background of the invention

In order to have a frozen aerated confection which can be extruded from a cartridge, the frozen aerated confection must be sufficiently soft at the point of extrusion to allow the extrusion to take place without the need to exert excessive pressure on the cartridge. To ensure that the frozen aerated confection was soft enough it has, in the past, been necessary to dispense the frozen aerated confection at a temperature no lower than about -12°C. The need to dispense at this temperature has practical difficulties associated with it. The freezing cabinets in commercial and domestic premises are usually maintained at a temperature of around -18°C or less so it is not possible to store cartridges in such freezing cabinets and then to remove them and immediately extrude the frozen aerated confection from them. The cartridges must therefore either be stored in a separate freezer compartment or they must be removed from the -18° freezer compartment and allowed to warm up to an appropriate temperature before the frozen aerated confection can be extruded from them Trying to produce soft frozen aerated products at -18°C has been the subject of many attempts which are all linked to the use of freezing point depressants which make the product 'softer' by reducing the ice content of the product. GB 2019187 describes various 'soft' ice cream confections containing sugars and sugar alcohols having a molecular weight of less than 600. More particularly, it describes ice cream confections with an overrun of at least 140%, containing glycerol in an amount of 1 to 5%, sorbitol, fructose and invert sugar. GB 2019187 also indicates that as long as those low molecular weight sugars are present in the required quantities, the presence of higher molecular weight sugars has no impact on the 'softness' of the end product.

In general, these soft compositions present major drawbacks. First of all, owing to the sugars which are used, these products are extremely sweet and require the use of very high overrun and/or the use of additives and/or the use of significant amounts of glycerol to suppress sweetness. The use of high overrun in a frozen aerated confection which is to be extruded from a cartridge is not practical as the pressure exerted on the frozen aerated confection during the extrusion compresses the frozen aerated confection and squeezes air from it reducing the overrun significantly. This reduction in overrun reduces the ability to suppress sweetness and results in the consumer receiving a frozen aerated confection with excessive sweetness. The use of excessive amounts of glycerol to suppress sweetness is not acceptable to many consumers. Although glycerol does not significantly contribute to the sweet taste it does generate a very noticeable off taste which consumers do not like. The ice cream confections of GB2019187 would not therefore be suitable for use in a cartridge from which they were intended to be extruded at temperatures around -18°C.

Secondly, in order to try and quantify the softness of the ice cream confections described therein, GB2019187 uses an Instron test, but it is submitted that this test does not really reproduce the mechanisms which take place in the mouth of a consumer eating such an ice cream confection. It is particularly presented that compositions according to GB2019187 containing high molecular weight sugars are not satisfactory in terms of softness, nevertheless, when tested on Instron according to GB 2019187 they are fully within the teaching of GB 2019187. Therefore, GB 2019187 does not appear to fully resolve the problem of producing a frozen aerated confection which is soft enough at typical freezer temperatures eg -18°C or below to be extruded from a cartridge.

EP 0220836 discloses aerated protein-free and fat-free water-ice products which are said to be extrudable at 0 to 10°F (-17,8 to -12.2 °C). The products are characterised as having a defined ratio of higher saccharides to mono- and disaccharides and require a critical level of chemical emulsifier to effect desirable textural characteristics.

There is thus a need for a frozen aerated confections which will satisfy the criteria of being organoleptically acceptable to the consumer and of being capable of being extruded from a cartridge at a temperature of about -18°C.

It has now be found that it is possible to make frozen aerated confections which are sufficiently soft that they can be extruded from a cartridge at -18°C by carefully selecting the sugars and particularly by avoiding high molecular weight sugars even in small quantities. It has also been found that, by carefully selecting the sugars, it is possible to make a product which can be extruded from a cartridge without having to use organoleptically unacceptable amounts of glycerol and/or additives and/or high overrun to suppress sweetness.

## Tests and definitions

### Average molecular weight

As used herein, the average molecular weight for a mixture of freezing point depressants (fpds) is defined by the number average molecular weight $\langle M \rangle_n$ shown in the equation below. Where $w_i$ is the mass of species i, $M_i$ is the

molar mass of species i and $N_i$ is the number of moles of species i of molar mass $M_i$.

$$<M>_n = \frac{\sum w_i}{\sum (w_i/M_i)} = \frac{\sum N_i M_i}{\sum N_i}$$

**Freezing point depressants**

Freezing point depressants (fpds) are compounds which when included in a frozen aerated confection make the confection softer by reducing the ice content of the confection. Suitable compounds include

- monosaccharides for example dextrose, fructose
- disaccharides for example sucrose, lactose
- Oligosaccharides containing from 3 to ten monosaccharide units joined in glycosidic linkage.
- Corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight $<M>_n$ can be calculated from the equation below. (Journal of Food Engineering, 33 (1997) 221-226)

$$<M>_n = \frac{18016}{DE}$$

- erythritol arabitol, xylitol, sorbitol, glycerol, mannitol, lactitol and maltitol.
- mixtures of two or more of the above

**Definition of overrun.**

Overrun (OR) is defined by the following equation

$$OR = \frac{(volume..of.ice..cream) - (volume..of..premix..at..ambient.temp)}{(volume..of..premix..at..ambient..temp)} \times 100$$

**Brief description of the invention**

It is the object of the present invention to provide a frozen product comprising a cartridge containing a frozen aerated confection having an overrun of above 20% and below 80%, said frozen aerated confection comprising;

- no more than 1.5% w/w glycerol
- freezing point depressants in an amount above 25 % w/w and under 37 % w/w, preferably above 26% w/w, more preferably above 27% w/w, and
- between 0 and 15% w/w fat

wherein the freezing point depressants have a number average molecular weight $<M>_n$ of less than 275.

Preferably, the frozen aerated confection according to the invention contains at least 2% w/w fat.

Preferably the frozen aerated confection according to the invention contains less than 12% w/w fat, more preferably between 4 and 10% w/w.

Preferably the freezing point depressants have a number average molecular weight $<M>_n$ below 250. More preferably, the freezing point depressants have a number average molecular weight $<M>_n$ below 230.

Preferably, the freezing point depressants comprise at least 98% (w/w) of mono, di and oligosaccharides .

Preferably, since fructose delivers a very sweet taste, the frozen aerated confection contains less than 5% w/w fructose, more preferably less than 2.5% w/w fructose.

Preferably also the frozen aerated confection according to the invention contains less than 0.5% glycerol, more preferably less than 0.25%, most preferably less than 0.1% glycerol. Preferably the frozen aerated confection according to the invention contains less than 10% w/w sorbitol, more preferably less than 5% w/w sorbitol.

Preferably, the frozen aerated confection according to the invention contains more than 2% and less than 8% w/w proteins, preferably less than 6% w/w since it has been found that too high a protein content leads to a chalky, cheesy texture which should be avoided.

In a preferred embodiment of the invention the frozen aerated confection has an overrun of less than 70%, more preferably less than 60%.

In another preferred embodiment of the invention the frozen aerated confection has an overrun of more than 40%, more preferably more than 50%.

The cartridge may comprise a hollow cylindrical body which is open at one end and closed by an end wall at the other end, a dispensing aperture in the end wall through which the frozen aerated confection is dispensed and a plunger which sealingly fits within the bore of the cylindrical body and which is movable within the bore of the cylindrical body towards the end wall so as to urge the frozen aerated confection towards the end wall whereby it can be extruded through the dispensing aperture. The dispensing aperture may be covered prior to use by a removable seal. The cartridge may contain a single serving of frozen aerated confection or it may contain several servings. It is preferred that the cartridge should be disposable. The cartridge may be manufactured from a synthetic plastic material such as polypropylene.

In one preferred embodiment, the end wall is in the shape of a truncated cone with the larger circular base of the cone being directly attached to the end of the cylindrical wall of the cartridge and the dispensing aperture being located in the smaller circular surface of the truncated cone. The cartridge is intended to be used with a dispensing machine comprising a frustoconical support having a corresponding shape to that of the truncated conical end wall and driving means to move the plunger towards the end wall when at least a part of the frustoconical surface of the truncated conical end wall is in contact with the frustoconical support

In another embodiment, the cylindrical wall of the cartridge extends outwardly beyond the end wall. This cartridge is intended to be used in a dispensing machine comprising support means and driving means to move the plunger towards the end wall when the outermost end of the outwardly extending cylindrical wall is supported on the support means. Cartridges of this type and the dispensing machines in which they are used are described in more detail in WO-A-00022936.

The cartridge may comprise a body to contain the frozen aerated confection having a dispensing aperture through which the frozen aerated confection can be dispensed and a flexible membrane sealed to the body to enclose the frozen aerated confection prior to dispensing. This cartridge is intended to be used in a dispensing machine in which driving means urges the membrane towards the dispensing aperture, applying pressure to the frozen aerated confection and extruding it through the dispensing aperture. Cartridges of this type and the dispensing machines in which they are used are described in more detail in EP-A-0919134.

### Detailed description of the invention

The present invention will be further described in the following examples wherein, unless indicated otherwise, the percentages are in weight by weight (w/w).

It should be noted that in the examples below the SMP (skimmed milk powder) is comprised of 50% (w/w) lactose and this needs to taken into account when calculating the total amount of freezing point depressants and the number average molecular weight $<M>_n$. Similarly, ingredients such as cocoa powder, whey concentrate, chocolate, fruit puree or juice, malt extracts also contain freezing point depressants that contribute to $<M>_n$.

Frozen aerated confections, for example ice cream, may be formulated and produced as follows and according to the following processing conditions:

Mixing - all ingredients are combined in an agitated heated mix tank. Once all ingredients have been blended together, the mixture is subjected to high shear mixing at a temperature of at least 65°C for 2 minutes in order to hydrate the stabilisers. Excessive temperature should however be avoided to prevent damage to heat labile components and the formation of cooked off flavours.

Homogenisation - the mix is then subjected to a homogenisation stage to reduce the bulk of the fat droplets to below 1μm. This is accomplished by homogenising the mixture using a valve homogeniser operating at a pressure of 150bar at a typical temperature of 70°C.

Pasteurisation - to conform to public health requirements the mix is subjected to pasteurisation treatment. The mix is heated to a temperature of 83°C and held for 20 seconds to achieve satisfactory treatment. The pasteurised mix is then rapidly cooled to chill temperatures, typically 4°C.

Ageing - The mix is held at chill temperature, typically 4°C.

Freezing - the mix is frozen using typical ice cream continuous freezers known at votators or scraped surface heat exchangers. These devices serve to freeze the mix and incorporate sufficient air to deliver the desired overrun. Although such devices usually deliver frozen aerated confections at temperatures of -5°C to -7°C, the high levels of freezing point depressants in the formulations within this invention mean that the frozen aerated confections are typically frozen down to temperatures of -10° to -13°C.

Following freezing in a votator the ice cream is packed into the cartridges and subjected to hardening process that reduces the temperature of the ice cream close to the final storage temperature.

Alternatively, formulations may be transferred from the votator to a cold extrusion device such as a single screw extruder where the frozen aerated confection can be further cooled under shear and packed into cartridges. Due to high levels of freezing point depressants the ice cream formulations disclosed in this invention will leave the cold extrusion device at temperatures of -20°C or lower.

The formulations in the table below are examples of frozen aerated confections of the present invention

| Example | 1 | 2 | 3 |
| --- | --- | --- | --- |
| | % (w/w) | % (w/w) | % (w/w) |
| Butter fat | 4 | 4 | 4 |
| Skimmed Milk Powder | 8 | 8 | 8 |
| Monoglyceryl palmitate | 0.15 | 0.15 | 0.15 |
| Iota Carrageenan | 0.2 | 0.2 | 0.2 |
| Vanillin | 0.01 | 0.01 | 0.01 |
| Sucrose | 8.125 | 8 | 8.5 |
| Lactose | 3.5 | 5 | 5.5 |
| Dextrose | 19.375 | 19.7 | 20.3 |
| Glycerol | 1.5 | 1.5 | 0.5 |
| Water | to 100 | to 100 | to 100 |
| Average Molecular weight | 215 | 218 | 227 |
| Overrun (%) | 70 | 50 | 75 |

To supplement this description and to contribute to a better understanding of the features of the invention, the accompanying drawings which form an integral part hereof and which are given by way of illustration and without limitation, show the following:

Figure 1 shows a diagrammatic diametric cross-sectional view of a cartridge from which a frozen aerated confection may be dispensed by extrusion,

Figure 2 is similar to Figure 1, showing the cartridge located in a cartridge support of a dispensing machine machine support,

Figure 3 is a bottom axial view of the cartridge of Figure 1, showing two of the numerous possible configurations for the extrusion dispensing aperture,

Figure 4 shows a perspective view of a dispensing machine for extruding frozen aerated product from the cartridge shown in Figures 1 to 3,

Figure 5 shows a side elevation and cross-sectional view of the machine of Figure 4,

Figure 6 shows a view of the interior of the dispensing machine of Figures 4 and 5,

Figure 7 shows a perspective view of a second embodiment of cartridge for use in the present invention,

Figure 8 is a cross-sectional view of the cartridge of Figure 7, and

Figure 9 is a cross-sectional view of a third embodiment of cartridge for use in the present invention

## PREFERRED EMBODIMENTS OF THE INVENTION

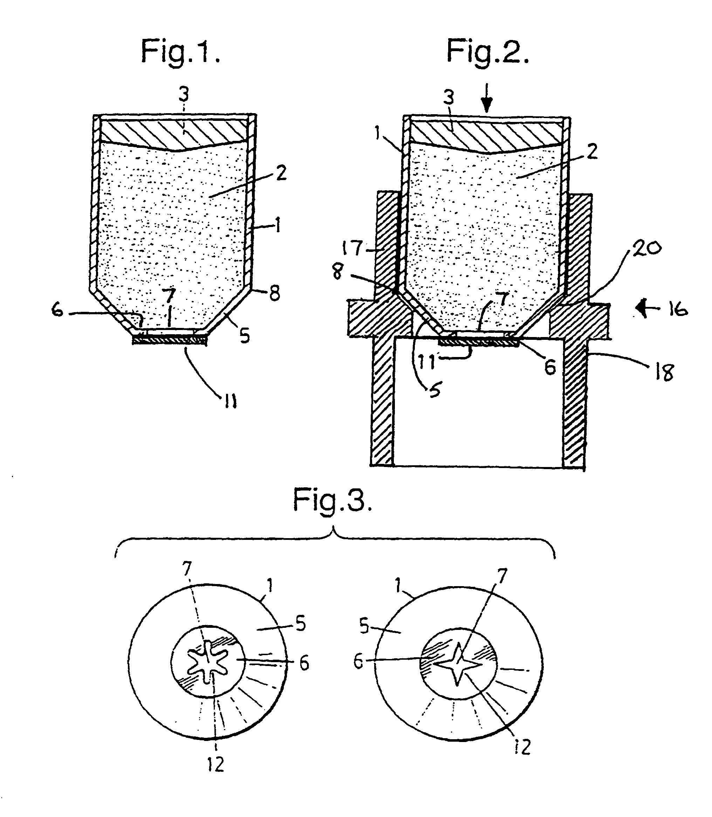

Figures 1 to 3 illustrate the structure of a preferred embodiment of a cartridge suitable for use in the present invention. The cartridge has a hollow cylindrical body (1) of capacity suitable for the mass of frozen aerated confection, for example an ice cream, (2) it is to contain. The hollow cylindrical body (1) is open at one end and closed at the other end by an end wall comprising a truncated conical section (5) extending from the cylindrical body and a flat circular section (6) having a dispensing aperture (7). The larger circular base of the cone is directly attached, or is formed integrally with, the end (8) of the cylindrical body (1). As shown in Figures 1 and 2, a plunger (3) is a sealing fit inside the bore of the cylindrical body and is movable within the bore of the cylindrical body towards the end wall so as to urge the frozen aerated confection towards the dispensing aperture (7) so that it can be extruded through the dispensing aperture (7). The plunger (3), besides being one of the elements for sealing the pack during its storage and handling from the place of packing to the time of its consumption, is designed to receive the action of a piston of a dispensing machine when it is required to dispense the product (2).

The dispensing aperture (7) which may adopt one of the rounded vertex star forms in Figure 3 or any other which may be deemed suitable, such as square, rectangular, triangular, oval, etc. The extruded frozen aerated confection adopts the cross-section of the dispensing aperture (7) as the confection is extruded through the dispensing aperture.

The cartridge described above is intended to be used in a dispensing machine of the type that is now to be described. The dispensing machine for extrusion of the frozen aerated confection (2) contained in the cartridge comprises a stand or base (13) to support the machine as a whole on a counter top, although this stand (13) is linked to the upper part (4) by way of a removable coupling (14) so that said stand may be used only when necessary and can be removed when, for instance, the upper part (4) is mounted on a wall.

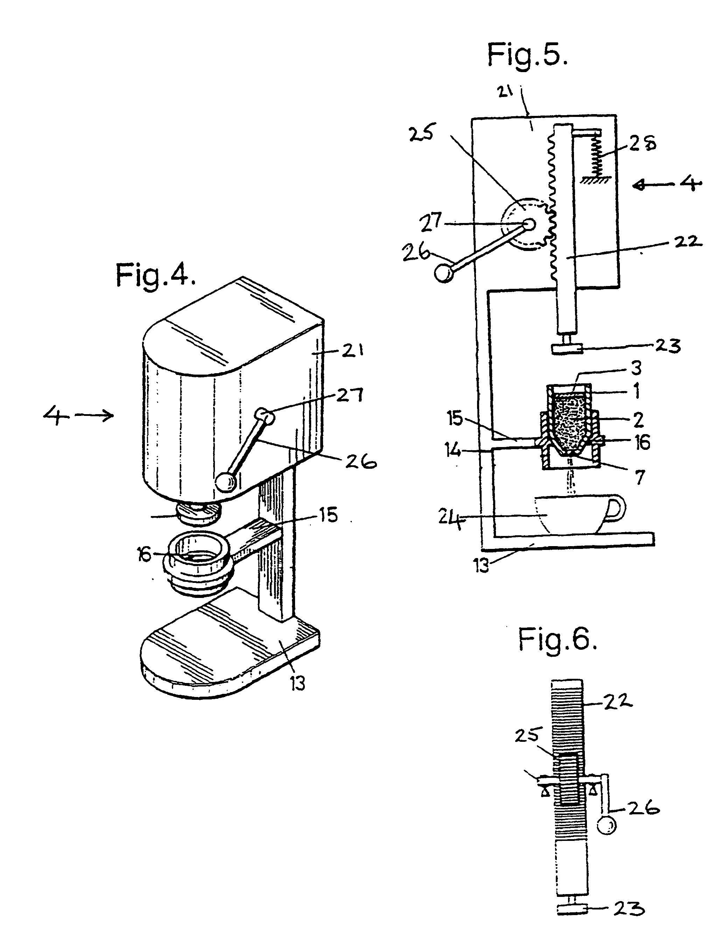

At the bottom of the upper part (4) and here located above the stand or base (13), the upper part (4) has an arm (15) which terminates in a cartridge support (16). As shown in Figures 2 and 5, the cartridge support (16) comprises an upstanding annular wall (17) having an internal diameter over the upper part (18) of its length such that the cylindrical body (1) of the cartridge is a tight but removable fit inside the upper part (18) of the annular wall (17) so that the cartridge is held vertically. The cartridge support has an inwardly directed annular flange (19). The upper surface of the flange (19) has a frustoconical surface (20) corresponding to the outer surface of the truncated conical section (5) of the end wall. As shown in Figure 2, when the cartridge is located in the cartridge support (16), the frustoconical surface (20) contacts at least part of the truncated conical section (5) of the cartridge.

A housing (21) contains a vertical rack (22), specifically set coaxially to the cartridge support (16). The rack (22) terminates at the bottom with a ram (23) of suitable size and shape to enter the open end the cartridge when it is held in the cartridge support (16) to contact the plunger (3) to move the plunger (3) towards the end wall to extrude the frozen aerated confection through the dispensing aperture (7) into a serving container (24) placed below the cartridge support (16).

The rack (22) is moved vertically through a ring gear (25) which meshes with it and is operated manually by a lever (26) which rotates about a pivot pin (27) which traverses the housing (21) laterally and extends externally of the housing (21) so that the lever (26) is exterior to it and, therefore, fully accessible for use by the operator. The machine is designed so that when the product has been dispensed, the rack (22) and more specifically the ram (23) revert automatically to an upper limit by means of a return spring (28) fitted between said rack (22) and the housing (21).

When the cartridge is in place in the dispensing machine, at least part of the truncated conical section (5) of the end wall is in contact with the frustoconical surface (20) of the cartridge support (16). The principle of operation is then that a downward motion of the rack (22) and ram (23) drives the plunger (3) toward the end wall, thereby forcing extrusion of the frozen aerated confection through the dispensing aperture (7) and into a suitable serving container (24). Because the cartridge is supported not only by way of the bottom outside edge (8) of the cylindrical body (1), but also by means of the truncated conical section (5) it will not be deformed by the pressure generated by the ram (23).

The cartridge is closed and sealed until its contents are to be consumed, with the aid of a thin disc (11) which matches the flat circular section (6) of the end wall in shape and size.

The portions (12) of the flat circular sections (6) of the end wall which extend into the dispensing aperture (7) when the dispensing aperture (7) is of a star shape as shown in Figure 3 are designed and of dimensions to guarantee that they will bend minimally under the pressure of the ram 23 on the plunger (3) in order, in turn, to minimise any deformation of the cross-section of the extruded product. A feature that further aids in the achievement of this objective is the thermal contact between the truncated conical section (5) and the frustoconical surface (20) of the cartridge support (16) which, with the warming of said support (16) and more specifically of the frustoconical surface (20), permits a slight rise in the temperature of the product (2) in the vicinity of the truncated conical section (5), enabling the frozen aerated confection (2) to move more readily towards the dispensing aperture (7) therefore allowing it to emerge from the machine with lower pressure on the plunger cap (3). Said warming must not affect the main body of the cartridge or the frozen aerated confection contained within, as this could damage its eating quality.

In practice, the cartridge and the cartridge support (16) may be configured in the manner shown in Figures 1 to 6 or in any other way that ensures that the cartridge is completely stable in the cartridge support (16) and that the ram (23) is able to operate properly to expel the product. Accordingly, said ram (23) may be of a shape and size matching those of the bore of the cylindrical body (1) or, if the plunger (3) is of sufficient rigidity, it may be undersized.

The cartridge may comprise a single serving, so that all the contents (2) pass to the serving container (24) in a single operation; or else the cartridge may hold several servings for distribution of the contents to various receptacles (24), in which case the cartridge support (16) should be height-adjustable so as to bring the position of the cartridge support (16) and, therefore, of the cartridge itself into line with the stroke requirements of the ram (23).

The frozen aerated confection (2) is stored in plastic, cardboard or similar cartridges before being dispensed but may be consumed by the user in more attractive receptacles, such as a plate, a cup or any other glass, ceramic or similar item.

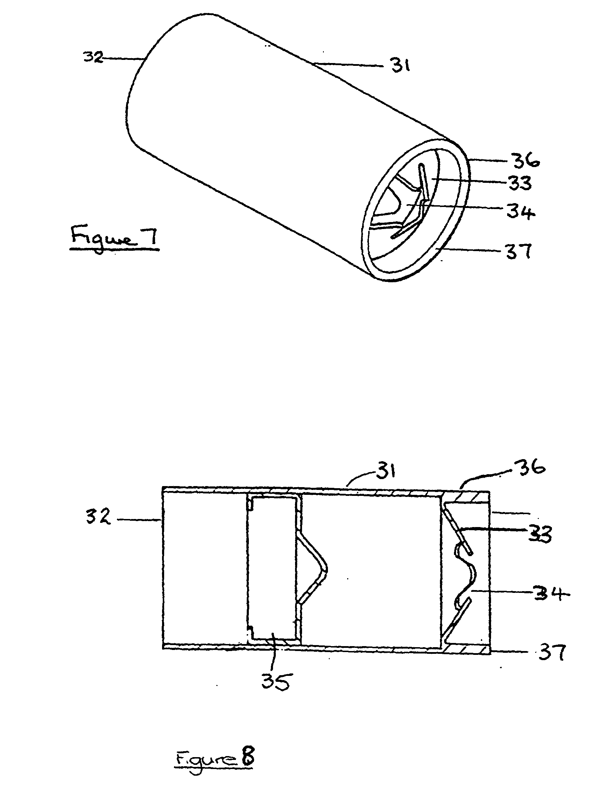

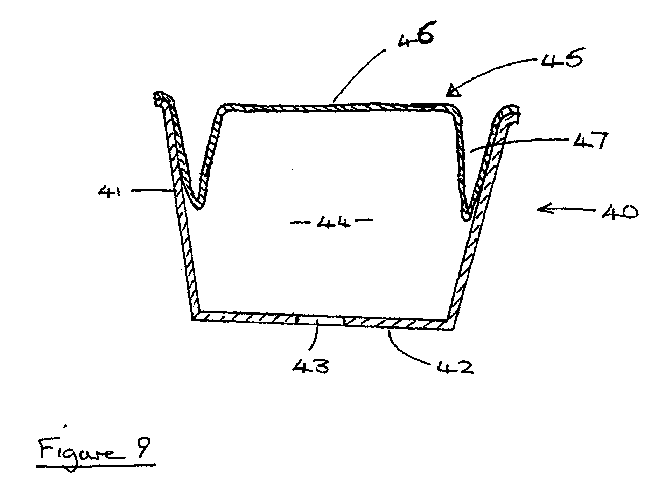

A second embodiment of cartridge for use in the present invention is shown in Figures 7 and 8. The cartridge has a hollow cylindrical body (31) having an open end (32) and an end wall (33) towards the other end of the cylindrical body. A dispensing aperture (34) through which frozen aerated confection can be extruded is provided in the end wall (33). A plunger (35) is a sealing fit within the bore of the hollow cylindrical body (1) and is movable within the bore of the hollow cylindrical body (1) towards the end wall (33). An annular wall (36) extend away from the cylindrical body (1) at said other end of the cylindrical body. The outer surface of the end wall (33) is located within the annular wall (36). The thickness of the annular wall (36) is greater than the thickness of the walls of the cylindrical body between the open end (32) and the end wall (33). The outer end of the annular wall (36) provides a support surface (37) on which the cartridge is supported in a dispensing machine (not shown). The general features of a dispensing machine for use with the cartridge of Figures 7 and 8 are the same as those already described with reference to Figures 2, 4, 5 and 6 except that the cartridge support (similar in function to 16 in the earlier Figures) has an inwardly directed flange (similar in function to the flange 19 in the earlier Figures) which has an upper surface which extends into the bore of the cylindrical body perpendicularly to the wall of the hollow cylindrical body. When a cartridge as shown in Figures 7 and 8 is located in the cartridge support of this dispensing machine, the support surface (37) contacts the upper surface of the flange of the cartridge support. The extra thickness of the annular wall (36) supports the cartridge as pressure is applied as the plunger (35) is urged towards the end wall (33) as the dispensing machine is operated in a similar way to that already described.

A third embodiment of cartridge is shown in Figure 9. The cartridge of Figure 9 comprises a body (40) having an upstanding peripheral wall (41) and a base (42). A dispensing aperture (43) extends through the base (42). Prior to dispensing the body contains a frozen aerated confection (44) and the open end of the body (40) is sealed with a flexible membrane (45). The membrane is such that, prior to dispensing, a central circular section (46) lies in the plane of the top of the peripheral wall (41) and an annular trench (47) is provided around the central section (46). The depth of the trench (47) is substantially equal to half the height of the peripheral wall (41). The general features of a dispensing machine for use with the cartridge of Figure 9 are the same as those already described with reference to Figures 2, 4, 5 and 6 except that the cartridge support (similar in function to 16 in the earlier Figures) has an inwardly directed flange (similar in function to the flange 19 in the earlier Figures) which has an upper surface which extends into the bore of the cylindrical.body perpendicularly to the wall of the hollow cylindrical body. When a cartridge as shown in Figure 9 is located in the cartridge support of this dispensing machine, the base (42) contacts the upper surface of the flange of the cartridge support. As a ram (similar to 23 in the earlier Figures) is advanced towards the cartridge, the ram contacts the flexible membrane (45) and applies pressure to extrude the frozen aerated confection through the dispensing aperture (43). The ram is preferably of a shape that is complementary to that of the interior of the body (40) so that as it advances into the body (40) the membrane is pushed against the interior of the peripheral wall (41) of the body (40) ensuring that substantially all of the frozen aerated confection (44) is extruded through the dispensing aperture (43).

## Claims

1. A frozen product comprising a cartridge containing a frozen aerated confection having an overrun of above 20% and below 80%, said frozen aerated confection comprising no more than 1.5% w/w glycerol, freezing point depressants in an amount above 25 % w/w and under 37 % w/w, and between 0 and 15% w/w fat wherein the freezing point depressants have a number average molecular weight $<M>_n$ below 275.

2. A frozen product according to claim 1 in which the frozen aerated confection contains between 2% and 12% fat.

3. A frozen product according to claim 1 or 2 wherein the freezing point depressants have a number average molecular weight $<M>_n$ below 250.

4. A frozen product according to any preceding claim wherein the freezing point depressants comprise at least 98% (w/w) of mono, di and oligosaccharides .

5. A frozen product according to any preceding claim in which the frozen aerated confection contains less than 5 % w/w fructose.

6. A frozen product according to any preceding claim in which the frozen aerated confection contains less than 0.25% (w/w)glycerol, preferably less than 0.1% (w/w).

7. A frozen product according to any preceding claim in which the frozen aerated confection contains more than 2% and less than 8% proteins.

8. A frozen product according to any preceding claim in which the frozen aerated confection has an overrun of less than 70%.

9. A frozen product according to claim 8 in which the frozen aerated confection has an overrun of less than 60%.

10. A frozen product according to any preceding claim in which the frozen aerated confection has an overrun of more than 40%.

11. A frozen product according to claim 10 in which the frozen aerated confection has an overrun of more than 50%.

12. A frozen product according to any preceding claim in which the cartridge comprises a hollow cylindrical body which is open at one end and closed by an end wall at the other end, a dispensing aperture in the end wall through which the frozen aerated product is dispensed and a plunger which sealingly fits within the bore of the cylindrical body and which is movable within the bore of the cylindrical body towards the end wall so as to urge the frozen aerated product towards the dispensing aperture whereby it can be extruded through the dispensing aperture.

13. A frozen product according to claim 12 wherein the dispensing aperture is covered prior to use by a removable seal.

14. A frozen product according to claim 12 or claim 13 in which the end wall is in the shape of a truncated cone with the larger circular base of the cone being directly attached to the end of the cylindrical wall of the cartridge and the dispensing aperture being located in the smaller circular surface of the truncated cone.

15. A frozen product according to claim 12 or claim 13 in which the cylindrical wall of the cartridge extends outwardly beyond the end wall.

16. A frozen product according to any one of claims 1 to 11 in which cartridge may comprise a body to contain the frozen aerated confection having a dispensing aperture through which the frozen aerated confection can be dispensed and a flexible membrane sealed to the body to enclose the frozen aerated confection prior to dispensing.

**Patentansprüche**

1. Gefrorenes Produkt, umfassend eine Hülse, welche ein gefrorenes, belüftetes Konfekt mit einem Überlauf von über 20% und unter 80% enthält, besagtes gefrorenes, belüftetes Konfekt nicht mehr als 1,5% Gew./Gew. Glycerol, Gefrierpunktserniedrigungsmittel in einer Menge über 25% Gew./Gew. und unter 37% Gew./Gew. und zwischen 0 und 15% Gew./Gew. Fett umfasst, worin die Gefrierpunktserniedrigungsmittel ein Molekulargewicht-Zahlenmittel $\langle M \rangle_n$ von weniger als 275 haben.

2. Gefrorenes Produkt gemäß Anspruch 1, worin das gefrorene, belüftete Konfekt zwischen 2% und 12% Fett enthält.

3. Gefrorenes Produkt gemäß Anspruch 1 oder 2, worin die Gefrierpunktserniedrigungsmittel ein Molekulargewicht-Zahlenmittel $\langle M \rangle_n$ unter 250 haben.

4. Gefrorenes Produkt gemäß einem vorhergehenden Anspruch, worin die Gefrierpunktserniedrigungsmittel mindestens 98% (Gew./Gew.) Mono-, Di- und Oligosaccharide umfassen.

5. Gefrorenes Produkt gemäß einem vorhergehenden Anspruch, in welchem das gefrorene, belüftete Konfekt weniger als 5% Gew./Gew. Fructose enthält.

6. Gefrorenes Produkt gemäß einem vorhergehenden Anspruch, in welchem das gefrorene, belüftete Konfekt weniger als 0,25% (Gew./Gew.) Glycerol, vorzugsweise weniger als 0,1% Gew./Gew. enthält.

7. Gefrorenes Produkt gemäß einem vorhergehenden Anspruch, in welchem das gefrorene, belüftete Konfekt mehr als 2% und weniger als 8% Proteine enthält.

8. Gefrorenes Produkt gemäß einem vorhergehenden Anspruch, in welchem das gefrorene, belüftete Konfekt einen Überlauf von weniger als 70% hat.

**9.** Gefrorenes Produkt gemäß Anspruch 8, in welchem das gefrorene, belüftete Konfekt einen Überlauf von weniger als 60% hat.

**10.** Gefrorenes Produkt gemäß einem vorhergehenden Anspruch, in welchem das gefrorene, belüftete Konfekt einen Überlauf von mehr als 40% hat.

**11.** Gefrorenes Produkt gemäß Anspruch 10, in welchem das gefrorene, belüftete Konfekt einen Überlauf von mehr als 50% hat.

**12.** Gefrorenes Produkt gemäß einem vorhergehenden Anspruch, in welchem die Hülse umfasst: einen hohlen zylindrischen Körper, welcher an einem Ende offen und durch eine Stirnwand am anderen Ende geschlossen ist, eine Ausgabeöffnung in der Stirnwand, durch welche das gefrorene, belüftete Produkt ausgegeben wird und einen Tauchkolben, welcher versiegelnd in das Bohrloch des zylindrischen Körpers passt und welcher innerhalb des Bohrlochs des zylindrischen Körpers zur Stirnwand hin beweglich ist, um das gefrorene, belüftete Produkt zur Ausgabeöffnung hin zu drängen, wodurch es durch die Ausgabeöffnung extrudiert werden kann.

**13.** Gefrorenes Produkt gemäß Anspruch 12, wobei die Ausgabeöffnung vor der Verwendung durch ein entfernbares Siegel bedeckt ist.

**14.** Gefrorenes Produkt gemäß Anspruch 12 oder Anspruch 13, in welchem die Stirnwand die Form eines gestutzten Kegels hat, wobei die größere, kreisförmige Basis des Kegels direkt an das Ende der zylindrischen Wand der Hülse befestigt ist und sich die Ausgabeöffnung in der kleineren kreisförmigen Oberfläche des gestutzten Kegels befindet.

**15.** Gefrorenes Produkt gemäß Anspruch 12 oder Anspruch 13, in welchem sich die zylindrische Wand der Hülse nach außen jenseits der Stirnwand erstreckt.

**16.** Gefrorenes Produkt gemäß einem der Ansprüche 1 bis 11, in welchem die Hülse einen Körper umfassen kann, um das gefrorene, belüftete Konfekt zu enthalten, mit einer Ausgabeöffnung, durch welche das gefrorene, belüftete Konfekt ausgegeben werden kann, und eine flexible Membran, gesiegelt an den Körper, um das gefrorene, belüftete Konfekt vor der Ausgabe einzuschließen.

**Revendications**

**1.** Denrée congelée comprenant une cartouche contenant une confiserie aérée congelée présentant un foisonnement supérieur à 20% et inférieur à 80%, ladite confiserie aérée congelée ne comprenant pas plus de 1,5% en poids de glycérol, des abaisseurs du point de congélation en quantité supérieure à 25% en poids et inférieure à 37% en poids, et entre 0 et 15% en poids de matière grasse, dans laquelle les abaisseurs du point de congélation ont une masse moléculaire moyenne en nombre (Mn) inférieure à 275.

**2.** Denrée congelée selon la revendication 1 dans laquelle la confiserie aérée congelée contient entre 2% et 12% de matière grasse.

**3.** Denrée congelée selon la revendication 1 ou 2 dans laquelle les abaisseurs du point de congélation ont une masse moléculaire moyenne en nombre (Mn) inférieure à 250.

**4.** Denrée congelée selon l'une quelconque des revendications précédentes dans laquelle les abaisseurs du point de congélation comprennent au moins 98% (en poids) de mono, di et oligosaccharides.

**5.** Denrée congelée selon l'une quelconque des revendications précédentes dans laquelle la confiserie aérée congelée contient moins de 5% en poids de fructose.

**6.** Denrée congelée selon l'une quelconque des revendications précédentes dans laquelle la confiserie aérée congelée contient moins de 0,25% (en poids) de glycérol, de préférence moins de 0,1 % (en poids).

**7.** Denrée congelée selon l'une quelconque des revendications précédentes dans laquelle la confiserie aérée congelée contient plus de 2% et moins de 8% de protéines.

**8.** Denrée congelée selon l'une quelconque des revendications précédentes dans laquelle la confiserie aérée congelée présente un foisonnement inférieur à 70%.

**9.** Denrée congelée selon la revendication 8 dans laquelle la confiserie aérée congelée présente un foisonnement inférieur à 60%.

**10.** Denrée congelée selon l'une quelconque des revendications précédentes dans laquelle la confiserie aérée congelée présente un foisonnement supérieur à 40%.

**11.** Denrée congelée selon la revendication 10 dans laquelle la confiserie aérée congelée présente un foisonnement supérieur à 50%.

**12.** Denrée congelée selon l'une quelconque des revendications précédentes dans laquelle la cartouche comprend un corps cylindrique creux qui est ouvert à une extrémité et fermé à l'autre extrémité par une paroi d'extrémité, une ouverture de distribution dans la paroi d'extrémité à travers laquelle la denrée aérée congelée est distribuée et un piston ajusté de manière étanche à l'intérieur de l'alésage du corps cylindrique et qui peut être déplacé à l'intérieur de l'alésage du corps cylindrique vers la paroi d'extrémité de manière à pousser la denrée aérée congelée vers l'ouverture de distribution, ce qui permet de l'extruder à travers l'ouverture de distribution.

**13.** Denrée congelée selon la revendication 12 dans laquelle l'ouverture de distribution est couverte avant l'emploi par un sceau amovible.

**14.** Denrée congelée selon la revendication 12 ou la revendication 13 dans laquelle la paroi d'extrémité a la forme d'un tronc de cône, la base circulaire la plus grande du cône étant fixée directement à l'extrémité de la paroi cylindrique de la cartouche et l'ouverture de distribution étant située dans la surface circulaire la plus petite du tronc de cône.

**15.** Denrée congelée selon la revendication 12 ou la revendication 13 dans laquelle la paroi cylindrique de la cartouche se prolonge vers l'extérieur au-delà de la paroi d'extrémité.

**16.** Denrée congelée selon l'une quelconque des revendications 1 à 11 dans laquelle la cartouche peut comprendre un corps destiné à contenir la confiserie aérée congelée possédant une ouverture de distribution à travers laquelle la confiserie aérée congelée peut être distribuée et une membrane souple scellée au corps pour enfermer la confiserie aérée congelée avant sa distribution.

# Fig.1.

# Fig.2.

# Fig.3.

Fig.4.

Fig.5.

Fig.6.

Figure 7

Figure 8

Figure 9